# EUROPÄISCHE PATENTSCHRIFT

(11) **EP 2 888 602 B1**
(45) Veröffentlichungstag und Bekanntmachung des Hinweises auf die Patenterteilung: **11.04.2018**
(21) Anmeldenummer: 13750301.7
(22) Anmeldetag: 13.08.2013
(51) Int. Cl.: G01S 15/89, G01S 15/93, G01S 7/52

(54) **VERFAHREN ZUR VERBESSERTEN ANSTEUERUNG VON ULTRASCHALLSENSOREN, FAHRERASSISTENZEINRICHTUNG UND KRAFTFAHRZEUG**
METHOD FOR THE IMPROVED ACTIVATION OF ULTRASONIC SENSORS, DRIVER ASSISTANCE DEVICE AND MOTOR VEHICLE
PROCÉDÉ DE COMMANDE AMÉLIORÉE DE CAPTEURS À ULTRASONS, SYSTÈME D'AIDE À LA CONDUITE ET VÉHICULE À MOTEUR

(30) Priorität: 25.08.2012 DE 102012016866
(43) Veröffentlichungstag der Anmeldung: 01.07.2015
(73) Patentinhaber: Valeo Schalter und Sensoren GmbH, 74321 Bietigheim-Bissingen (DE)
(72) Erfinder: HEIMBERGER, Markus, 74354 Besigheim (DE); GOTZIG, Heinrich, 71665 Vaihingen a. d. Enz (DE)
(86) Internationale Anmeldenummer: PCT/EP2013/066871
(87) Internationale Veröffentlichungsnummer: WO 2014/032959

(56) Entgegenhaltungen:
- DE-A1-102010 046 291
- GB-A- 2 392 979
- US-A1- 2009 254 260

## Beschreibung

Die Erfindung betrifft ein Verfahren zum Betreiben eines Ultraschallsystems mit einer Mehrzahl von an einem Kraftfahrzeug verteilt angeordneten Ultraschallsensoren, welche in Messzyklen zur Aussendung eines Ultraschallsignals angesteuert werden, wobei die Messzyklen wiederholt werden. Die Erfindung betrifft auch eine Fahrerassistenzeinrichtung zum Durchführen eines solchen Verfahrens, wie auch ein Kraftfahrzeug mit einer derartigen Fahrerassistenzeinrichtung.

Aus der Druckschrift DE 10 2009 000 401 A1 ist eine Vorrichtung für ein Kraftfahrzeug bekannt, mittels welcher eine Kollision zwischen dem Kraftfahrzeug und einem Objekt verhindert werden kann. An dem Kraftfahrzeug sind eine Vielzahl von Ultraschallsensoren verteilt angeordnet, welche eine erste Objektinformation des Objektes erfassen. Unabhängig davon erfasst ein optisches Messsystem, etwa eine Videokamera, eine zweite Objektinformation des Objektes. Mittels einer Korrelierungseinrichtung werden die erste und die zweite Objektinformation miteinander kombiniert. Es wird dadurch eine Objektplausibilisierung und Fusion der Objektinformationen ermöglicht.

Die Druckschrift DE 43 36 288 C1 beschreibt ein Fahrerassistenzsystem mit einer Kamera sowie mit zusätzlichen Sensoren. Die Kamera ist an einem Kraftfahrzeug verschwenkbar angeordnet, wobei abhängig von Signalen der zusätzlichen Sensoren die Ansteuerung einer kameraseitigen Verschwenkeinrichtung erfolgt.

Vorliegend geht es insbesondere um ein Fahrerassistenzsystem, mittels welchem der Fahrer eines Kraftfahrzeugs beim Einparken in eine Parklücke beziehungsweise beim Ausparken aus der Parklücke unterstützt wird. Eine solche Fahrerassistenzeinrichtung ist auch unter der Bezeichnung "Einparkhilfe" bekannt. Es werden dabei durch die Fahrerassistenzeinrichtung Abstände zwischen dem Kraftfahrzeug und fahrzeugexternen Objekten gemessen, während der Fahrer mit seinem Kraftfahrzeug rangiert. Der Fahrer wird dann über diese Abstände informiert, nämlich bzw. mit Hilfe einer optischen Anzeigeeinrichtung, etwa eines Displays, und/oder mittels einer akustischen Ausgabeeinrichtung, nämlich eines Lautsprechers. Zu diesem Zwecke werden Ultraschallsensoren sowohl am vorderen als auch am hinteren Stoßfänger des Kraftfahrzeugs angebracht. Zum Beispiel können jeweils vier oder sechs Ultraschallsensoren vorgesehen sein, die an dem jeweiligen Stoßfänger entlang des Umfangs des Kraftfahrzeugs verteilt angeordnet sind. Somit werden Objekte sowohl vor als auch hinter dem Kraftfahrzeug detektiert. Für eine optimale Abdeckung des gesamten Umgebungsbereiches vor bzw. hinter dem Kraftfahrzeug werden in der Regel mehrere Ultraschallsensoren der gleichen Bauart verwendet. Die Ultraschallsensoren können auch einen Bereich neben den Seitenflanken des Kraftfahrzeugs abdecken.

Bei gleichzeitiger Ansteuerung der Sensoren einer Fahrzeugseite würden sich die Ultraschallsensoren gegenseitig beeinflussen. Ein Ultraschallsensor könnte dann das Schallsignal eines anderen Ultraschallsensors empfangen, und die Messergebnisse könnten dann verfälscht werden. Um dies bei einer normalen Messung zu vermeiden, werden die Ultraschallsensoren im Stand der Technik in einer vorbestimmten Reihenfolge einer nach dem anderen angesteuert, sodass die Ultraschallsensoren einer nach dem anderen die jeweiligen Ultraschallsignale aussenden. Ist diese Reihenfolge vom ersten Ultraschallsensor bis zum letzten Ultraschallsensor einmal durchlaufen, so ist ein Messzyklus abgeschlossen. Diese Messzyklen werden dann wiederholt.

Innerhalb eines Messzyklus wird für jeden Ultraschallsensor ein Zeitfenster von beispielsweise 20 Millisekunden definiert, innerhalb dessen dieser Ultraschallsensor sein Ultraschallsignal aussenden und gegebenenfalls ein Echo oder mehrer Echos empfangen soll. Nach Ablauf dieses Zeitfensters wird dann der nächste Ultraschallsensor zum Aussenden seines Ultraschallsignals angesteuert, und es wird wieder ein entsprechendes Zeitfenster abgewartet, bis weiterhin der nächste Ultraschallsensor senden kann. Sind nun insgesamt sechs Ultraschallsensoren vorhanden, so beträgt die Zeitdauer eines einzelnen Messzyklus 120 Millisekunden. Diese Periodendauer kann gegebenenfalls auch verkürzt werden, indem zwei Ultraschallsensoren gleichzeitig senden, wobei hier beachtet wird, dass sich diese Ultraschallsensoren gegenseitig nicht stören können. Im günstigsten Fall beträgt die Zeitdauer eines einzelnen Messzyklus bei sechs Ultraschallsensoren also 60 Millisekunden.

Es sind insgesamt also 60 Millisekunden bis 120 Millisekunden erforderlich, bis überhaupt ein Ultraschallsensor das Objekt in der Umgebung des Kraftfahrzeugs detektieren kann. Es kann jedoch auch vorkommen, dass Ultraschallsensoren anderer Fahrzeuge Ultraschallsignale aussenden. Diese fremden Ultraschallsignale sind Störechos und können somit die Messung der eigenen Ultraschallsensoren beeinflussen. Die Fahrerassistenzeinrichtung muss nun die Störechos erkennen und herausfiltern, damit sie nicht zu einer verfälschten Anzeige führen. Dies erfolgt beispielsweise mit Hilfe einer Plausibilisierung: Ein Ultraschallsensor muss das Objekt bei annähernd gleichem Abstand über eine vorbestimmte Anzahl von Messzyklen hinweg detektieren, damit dieses Objekt als ein tatsächlich existierendes Objekt interpretiert werden kann. Erst dann wird das detektierte Objekt dem Fahrer gemeldet. Es muss also insgesamt eine Zeit von mehreren Messzyklen verstreichen, bis das Objekt endgültig als detektiert interpretiert werden kann. Werden beispielsweise drei Messzyklen abgewartet, so dauert es insgesamt beispielsweise 360 Millisekunden, bis das detektierte Objekt dem Fahrer angezeigt werden kann. Dies entspricht einem trägen Verhalten und ist insgesamt nachteilig, weil die Reaktionszeit auf neu auftauchende Objekte, die in den Erfassungsbereich der Ultraschallsensoren eintreten, entsprechend groß ist.

Eine gewisse Abhilfe schafft hier ein Verfahren, wie es in der Druckschrift DE 10 2010 033 209 A1 von dem Hause der Anmelderin beschrieben ist. Hier wird vorgeschlagen, einen Ultraschallsensor innerhalb eines Messzyklus mindestens zweimal anzusteuern, wenn in einem vorhergehenden Messzyklus dieser Ultraschallsensor ein fahrzeugexternes Objekt detektiert. Somit wird die für die Plausibilisierung der Präsenz des Objektes erforderliche Zeitdauer reduziert.

Ferner ist aus der GB 2 392 979 A eine Einparkhilfe für Fahrzeuge mit einem Ultraschallsystem bekannt, das eine Mehrzahl von an einem Kraftfahrzeug verteilt angeordneten Ultraschallsensoren umfasst. Die Ultraschallsensoren werden jeweils in Messzyklen zur Aussendung eines Ultraschallsignals angesteuert, wobei die Messzyklen wiederholt werden.

Aus der DE 10 2010 046 291 A1 ist eine Orientierungshilfevorrichtung mit einer Sensoranordnung bekannt, die eine Mehrzahl unterschiedlicher Sensoren umfasst, wobei die Sensoren insbesondere eine Lichtsensor, einen Ultraschallsensor sowie eine Metalldetektor umfassen.

Die US 2009/0254260 A1 beschreibt ein adaptives Geschwindigkeitsregelungssystem für ein Kraftfahrzeug. Das Kraftfahrzeug umfasst ein Langstreckensensor zur Erfassung eines Objektes, welches vor dem Kraftfahrzeug positioniert ist, zumindest einen Kurzstreckensensor zur Bestimmung der Position des Objektes in der Nähe des Kraftfahrzeugs, und eine Kontrolleinheit zur Erfassung der Informationen vom Langstreckensensor und von dem zumindest einen Kurzstreckensensor zur Kontrolle der Geschwindigkeit des Kraftfahrzeugs basierend auf den Informationen, wobei die Kontrolleinheit derart konfiguriert ist, dass dieser den zumindest einen Kurzstreckensensor in unterschiedlichen Modi betreibt, und einen Kurzstreckensensor Betriebsmodus auswählt als teilweise Reaktion auf die durch den Langstreckensensor erfasste Position des Objektes.

Es ist Aufgabe der Erfindung, eine Lösung aufzuzeigen, wie bei einem Verfahren der eingangs genannten Gattung die Reaktionszeit des Ultraschallsystems auf neue Objekte im Vergleich zum Stand der Technik verbessert werden kann.
Diese Aufgabe wird erfindungsgemäß durch ein Verfahren, durch eine Fahrerassistenzeinrichtung, wie auch durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben eines Ultraschallsystems mit einer Mehrzahl von an einem Kraftfahrzeug verteilt angeordneten Ultraschallsensoren, welche in Messzyklen zur Aussendung eines Ultraschallsignals angesteuert werden, wobei die Messzyklen wiederholt werden. Mittels einer von dem Ultraschallsystem verschiedenen Erfassungseinrichtung des Kraftfahrzeugs wird ein Objekt in einer Umgebung des Kraftfahrzeugs detektiert, und es wird eine relative Position des Objektes bezüglich des Kraftfahrzeugs bestimmt. In Abhängigkeit von der - durch die separate Erfassungseinrichtung ermittelten - aktuellen relativen Position wird dann die Anzahl der Ultraschallsensoren festgelegt, welche innerhalb der einzelnen Messzyklen angesteuert werden wobei falls mittels der Erfassungseinrichtung zumindest zwei Objekte in der Umgebung detektiert werden, die jeweilige aktuelle Geschwindigkeit der zumindest zwei Objekte mittels der Erfassungseinrichtung bestimmt wird und die Ansteuerung der Ultraschallsensoren innerhalb des Messzyklus, insbesondere die Reihenfolge der Ansteuerung der Ultraschallsensoren innerhalb des Messzyklus und/oder die Häufigkeit der Ansteuerung zumindest eines der Ultraschallsensoreninnerhalb des Messzyklus und/oder die Anzahl der anzusteuernden Ultraschallsensoreninnerhalb des Messzyklus, in Abhängigkeit von den Geschwindigkeitender Objekte festgelegt wird.

Demnach wird vorgeschlagen, die Information über die aktuelle Position eines Objektes, welche mittels einer im Kraftfahrzeug üblicherweise ohnehin vorhandenen Erfassungseinrichtung bestimmt wird, auch bei der Gestaltung der Messzyklen bzw. bei der Ansteuerung der Ultraschallsensoren zu berücksichtigen, indem die Anzahl der anzusteuernden und somit die Anzahl der innerhalb eines Messzyklus an der Überwachung der Umgebung teilnehmenden Ultraschallsensoren in Abhängigkeit von der aktuellen relativen Position des Objektes bezüglich des Kraftfahrzeugs bestimmt wird. Somit können beispielsweise nur diejenigen Ultraschallsensoren angesteuert werden, welche das detektierte Objekt überhaupt erfassen können oder aber in deren Erfassungsbereiche sich das detektierte Objekt hinein bewegt. Es können also insgesamt nur diejenigen Ultraschallsensoren innerhalb eines Messzyklus angesteuert werden, welche zur Messung des Abstands zwischen dem Objekt und dem Kraftfahrzeug auch tatsächlich erforderlich sind. Weil somit nur eine Untergruppe der vorhandenen Ultraschallsensoren innerhalb eines Messzyklus angesteuert werden kann, wird somit die Zeitdauer eines einzelnen Messzyklus im Vergleich zum Stand der Technik reduziert, sodass insgesamt auch die Reaktionszeit des Ultraschallsystems auf neue Objekte verbessert wird.

Der Begriff "Ansteuerung" bedeutet hier insbesondere einen einzelnen Messvorgang eines Ultraschallsensors. Die Ansteuerung eines Ultraschallsensors beinhaltet also, dass dieser Ultraschallsensor ein Ultraschallsignal aussendet und gegebenenfalls ein von einem Objekt reflektiertes Schallsignal empfängt.

In einer Ausführungsform ist vorgesehen, dass in Abhängigkeit von der aktuellen relativen Position des Objektes bezüglich des Kraftfahrzeugs auch die Reihenfolge der Ansteuerung der Ultraschallsensoren innerhalb eines Messzyklus festgelegt wird. Dies reduziert weiterhin die Reaktionszeit des Ultraschallsystems, weil derjenige Ultraschallsensor zuerst angesteuert werden kann, welcher das Objekt auch erfassen kann.

Beispielsweise kann dabei vorgesehen sein, dass innerhalb des Messzyklus derjenige Ultraschallsensor als erster Sensor angesteuert wird, in dessen Erfassungsbereich sich das Objekt befindet oder aber - wenn sich das Objekt beispielsweise noch nicht im Erfassungsbereich des gesamten Ultraschallsystems befindet - in dessen Erfassungsbereich sich das Objekt hinein bewegt. Somit wird als erster Sensor derjenige Ultraschallsensor innerhalb des Messzyklus angesteuert, welcher für die aktuelle Position des Objektes relevant ist. Somit kann das Objekt besonders schnell durch das Ultraschallsystem detektiert werden.

In einer weiteren Ausführungsform wird innerhalb des Messzyklus derjenige Ultraschallsensor als erster Sensor - also zuerst - angesteuert, welcher dem Objekt am nächsten liegt. Diese Ausführungsform erweist sich beispielsweise dann als vorteilhaft, wenn sich das Objekt gleichzeitig in jeweiligen Erfassungsbereichen von zwei separaten Ultraschallsensoren befindet. Hier kann anhand der relativen Position des Objektes bezüglich des Kraftfahrzeugs eingeschätzt werden, welcher der Ultraschallsensoren dem Objekt am nächsten liegt, und es kann derjenige Ultraschallsensor zuerst innerhalb des Messzyklus angesteuert werden, bei welchem die Entfernung zum Objekt am geringsten ist.

In einer noch weiteren Ausführungsform wird innerhalb des Messzyklus derjenige Ultraschallsensor als erster Sensor angesteuert, in dessen Richtung sich das detektierte Objekt bewegt.

Wie bereits ausgeführt, wird abhängig von der aktuellen relativen Position des Objektes bezüglich des Kraftfahrzeugs die Anzahl der Ultraschallsensoren festgelegt, welche innerhalb eines Messzyklus verwendet werden. Insbesondere bedeutet dies, dass innerhalb eines Messzyklus lediglich eine Untermenge der Ultraschallsensoren angesteuert werden können, welche abhängig von der Position des Objektes ausgewählt werden. Es kann dabei vorgesehen sein, dass ausschließlich ein einziger Ultraschallsensor oder aber ausschließlich zwei Ultraschallsensoren des Ultraschallsystems innerhalb des Messzyklus angesteuert werden.

Bevorzugt wird innerhalb des Messzyklus ausschließlich zumindest einer der folgenden Ultraschallsensoren angesteuert:
- derjenige Ultraschallsensor, in dessen Erfassungsbereich sich das Objekt befindet, und/oder
- derjenige Ultraschallsensor, in dessen Erfassungsbereich sich das Objekt hineinbewegt, wenn sich also das Objekt in Richtung auf den Erfassungsbereich dieses Ultraschallsensors zu bewegt.

Somit wird die Anzahl der angesteuerten Ultraschallsensoren auf ein Minimum reduziert bzw. es werden ausschließlich diejenigen Ultraschallsensoren angesteuert, welche für das detektierte Objekt auch tatsächlich benötigt werden. Die Reaktionszeit des Ultraschallsystems ist somit minimal.

In einer Ausführungsform ist vorgesehen, dass in Abhängigkeit von der aktuellen relativen Position eine Häufigkeit der Ansteuerung zumindest eines der Ultraschallsensoren innerhalb eines Messzyklus festgelegt wird. Somit kann derjenige Sensor häufiger als die übrigen Sensoren angesteuert werden, in dessen Erfassungsbereich sich das Objekt befindet oder aber in dessen Erfassungsbereich sich das Objekt hinein bewegt. Somit wird einerseits erreicht, dass das Objekt mittels des Ultraschallsystems besonders schnell detektiert werden kann. Andererseits hat dies den Vorteil, dass auch die übrigen Ultraschallsensoren innerhalb der Messzyklen - insbesondere lediglich einmal - angesteuert werden können und somit der gesamte Erfassungsbereich des Ultraschallsystems auf gegebenenfalls vorhandene Objekte überprüft werden kann, welche möglicherweise mit der Kamera nicht erkannt werden konnten.

Sind in der Umgebung des Kraftfahrzeugs zumindest zwei Objekte vorhanden, welche mittels der Erfassungseinrichtung detektiert werden, kann zur Gestaltung der Messzyklen - also für die Festlegung der Ansteuerung der Ultraschallsensoren innerhalb eines Messzyklus - auch die jeweilige Geschwindigkeit der zumindest zwei Objekte berücksichtigt werden. Somit erfolgt die Ansteuerung des Ultraschallsystems situationsabhängig und bedarfsgerecht.

In einer Ausführungsform ist vorgesehen, dass mittels der Erfassungseinrichtung die jeweils aktuelle Position des Objektes bezüglich des Kraftfahrzeugs verfolgt wird. Dann kann die Reihenfolge der Ansteuerung der Ultraschallsensoren innerhalb eines Messzyklus und/oder die Anzahl der anzusteuernden Ultraschallsensoren und/oder die Häufigkeit der Ansteuerung eines Ultraschallsensors innerhalb des Messzyklus fortlaufend abhängig von der jeweils aktuellen Position eingestellt werden. Dies bedeutet, dass die Gestaltung der Messzyklen fortlaufend und kontinuierlich auf die sich verändernde Position des Objektes bezüglich des Kraftfahrzeugs angepasst wird. Somit ist stets eine schnellere Aktion des Ultraschallsystems gewährleitstet, und das Ultraschallsystem liefert rasch neue bzw. aktuelle und präzise Abstandswerte.

Hinsichtlich der Ausgestaltung der Erfassungseinrichtung sind verschiedene Ausführungsformen vorgesehen:
In einer bevorzugten Ausführungsform weist die Erfassungseinrichtung einen Erfassungsbereich auf, welcher in horizontaler Richtung breiter als ein Erfassungsbereich eines einzelnen Ultraschallsensors ist. Somit kann mittels der Erfassungseinrichtung die aktuelle Position des Objektes über einen größeren Erfassungsbereich bestimmt werden, sodass auch eine zuverlässige Festlegung der Anzahl der anzusteuernden Ultraschallsensoren ermöglicht wird. Insbesondere ist der horizontale Erfassungsbereich der Erfassungseinrichtung gleich oder größer als der gesamte horizontale Erfassungsbereich des Ultraschallsystems.

Auch die Reichweite der Erfassungseinrichtung ist bevorzugt größer als die Reichweite der Ultraschallsensoren. Somit kann das Objekt bereits im Vorfeld bzw. vorab detektiert werden, und auch die Anzahl der anzusteuernden Ultraschallsensoren und/oder die Reihenfolge der Ansteuerung und/oder die genannte Häufigkeit kann bereits im Voraus bestimmt werden, bevor das Objekt in den Erfassungsbereich des Ultraschallsystems gelangt. Auch wenn sich das Objekt außerhalb des Erfassungsbereichs des Ultraschallsystems befindet, kann bei den aktuellen Messzyklen die Anzahl der innerhalb eines Messzyklus angesteuerten Ultraschallsensoren und/oder die Reihenfolge der Ansteuerung und/oder die Häufigkeit in Abhängigkeit von der aktuellen Position des Objektes festgelegt werden.

Als Erfassungseinrichtung zur Bestimmung der aktuellen Position des Objektes kann zumindest eine der folgenden Einrichtungen verwendet werden: Eine Kamera, insbesondere eine Videokamera, und/oder ein Radargerät und/oder ein optischer Abstandssensor, insbesondere ein Laser. All diese Einrichtungen ermöglichen die Erfassung von Objekten über einen relativ breiten Erfassungsbereich und haben außerdem deutlich größere Reichweiten als Ultraschallsensoren.

Die Erfindung betrifft außerdem eine Fahrerassistenzeinrichtung, welche zum Durchführen eines erfindungsgemäßen Verfahrens ausgebildet ist.

Ein erfindungsgemäßes Kraftfahrzeug umfasst eine erfindungsgemäße Fahrerassistenzeinrichtung.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: In schematischer Darstellung einen vorderen Bereich eines Kraftfahrzeugs gemäß einer Ausführungsform der Erfindung, welches sich in einer ersten Situation befindet;
- Fig. 2: in schematischer Darstellung das Kraftfahrzeug, das sich in einer zweiten Situation befindet; und
- Fig. 3: in schematischer Darstellung das Kraftfahrzeug, das sich in einer dritten Situation befindet.

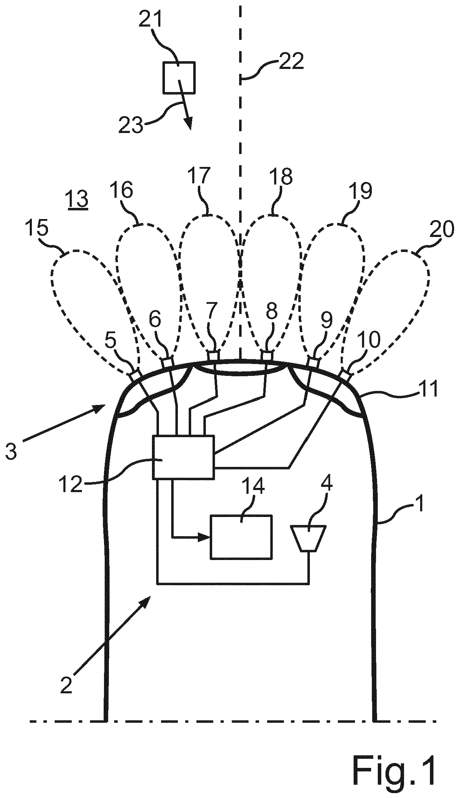

Ein in Fig. 1 dargestelltes Kraftfahrzeug 1 ist beispielsweise ein Personenkraftwagen. Das Kraftfahrzeug 1 beinhaltet eine Fahrerassistenzeinrichtung 2, welche zum Unterstützen des Fahrers beim Führen des Kraftfahrzeugs 1 ausgebildet ist. Die Fahrerassistenzeinrichtung umfasst ein Ultraschallsystem 3, wie auch eine Erfassungseinrichtung, welche im Ausführungsbeispiel als eine Kamera 4, nämlich eine Videokamera, ausgebildet ist.

Das Ultraschallsystem 3 beinhaltet beispielsweise sechs Ultraschallsensoren 5 bis 10, welche an einem vorderen Stoßfänger 11 verteilt angeordnet sind. Die Anzahl sowie die Anordnung der Ultraschallsensoren 5 bis 10 sind in Fig. 1 lediglich beispielhaft dargestellt. Die Anzahl sowie die Anordnung der Ultraschallsensoren 5 bis 10 können je nach Ausführungsform unterschiedlich sein. Es können auch Ultraschallsensoren an einem hinteren Stoßfänger des Kraftfahrzeugs 1 angebracht sein, welche in gleicher Weise angesteuert werden können.

Die Ultraschallsensoren 5 bis 10 sind mit einer elektronischen Steuereinrichtung 12 elektrisch gekoppelt und werden mittels der Steuereinrichtung 12 angesteuert. Die Steuereinrichtung 12 kann beispielsweise einen Mikrocontroller und/oder einen digitalen Signalprozessor beinhalten.

Anhand der Signale der Ultraschallsensoren 5 bis 10 ermittelt die Steuereinrichtung 12 Abstände zwischen dem Kraftfahrzeug 1 und den Objekten, die sich in einer Umgebung 13 des Kraftfahrzeugs 1 befinden. Diese Abstände können dann mit Hilfe einer Ausgabeeinrichtung 14 ausgegeben werden, welche einen Lautsprecher und/oder ein Display aufweisen kann. Gegebenenfalls können diese Messdaten auch für die Funktion des automatischen Parkens verwendet werden.

Die Kamera 4 ist beispielsweise eine CCD-Kamera oder aber eine CMOS-Kamera. Sie kann beispielsweise hinter der Windschutzscheibe platziert sein. Alternativ kann auch vorgesehen sein, dass die Kamera 4 am Stoßfänger 11 angeordnet ist.

Die Ultraschallsensoren 5 bis 10 haben jeweilige Erfassungsbereiche 15 bis 20, welche sich gegenseitig gegebenenfalls paarweise überlappen können oder aber relativ dicht aneinander liegen können. Die Reichweite eines einzelnen Ultraschallsensors 5 bis 10 kann beispielsweise 2,5 Meter betragen und ist grundsätzlich abhängig von der jeweiligen Konfiguration. Die Reichweite eines einzelnen Ultraschallsensors 5 bis 10 kann im Allgemeinen zwischen 2 Meter und 10 Meter liegen.

Die Kamera 4 hat einen relativ breiten Erfassungswinkel, sodass der horizontale Erfassungsbereich der Kamera 4 insgesamt größer als der gesamte Erfassungsbereich aller Ultraschallsensoren 5 bis 10 zusammen ist und somit alle Erfassungsbereiche 15 bis 20 abdeckt. Bekanntlich weist die Kamera 4 auch eine größere Reichweite als die Ultraschallsensoren 5 bis 10 auf. In den erfassten Bildern der Kamera 4 werden Objekte detektiert, die sich in der Umgebung 13 befinden. Solche Objekterkennungsalgorithmen, welche zur Identifizierung eines Objektes in erfassten Bildern dienen, sind bereits Stand der Technik. Mittels der Kamera 4 können die detektierten Objekte dann auch verfolgt werden, sodass stets die aktuelle relative Position dieses Objektes relativ zum Kraftfahrzeug 1 bekannt ist, und zumindest ein Winkel des Objektes bezüglich einer Mittellängsachse 22 des Kraftfahrzeugs 1. Die relative Position meint hier insbesondere also einen Zielwinkel des Objektes, also einen Winkel zwischen einer das Objekt und das Fahrzeug 1 verbindenden Geraden und einer Referenzgeraden (beispielsweise der Mittellängsachse 22 des Kraftfahrzeugs 1).

Die Ultraschallsensoren 5 bis 10 werden in Messzyklen angesteuert, welche wiederholt werden. Die Messzyklen können sich auch untereinander unterscheiden, so dass beispielsweise die Reihenfolge der Ansteuerung der Ultraschallsensoren von Messzyklus zu Messzyklus variieren kann. Es wird angestrebt, die Zeitdauer eines einzelnen Messzyklus so gering wie möglich zu halten. Innerhalb eines einzelnen Messzyklus kann dabei ein einziger Ultraschallsensor oder aber eine Untergruppe von mindestens zwei Ultraschallsensoren 5 bis 10 des Ultraschallsystems 3 angesteuert werden, und zwar einer nach dem anderen. Die Anzahl der Ultraschallsensoren 15 bis 20, welche innerhalb eines einzelnen Messzyklus angesteuert werden, sowie gegebenenfalls die Reihenfolge der Ansteuerung sowie die Häufigkeit der Ansteuerung der einzelnen Sensoren werden vorliegend in Abhängigkeit von Informationen der Kamera 4 festgelegt. Und zwar erfasst die Kamera 4 - wie bereits ausgeführt - die aktuelle relative Position eines Objektes relativ zum Kraftfahrzeug 1. In Abhängigkeit von dieser Position wird dann mittels der Steuereinrichtung 12 festgelegt, wie viele Ultraschallsensoren 5 bis 10 innerhalb eines Messzyklus angesteuert werden und mit welcher Reihenfolge diese Ansteuerung erfolgen soll sowie wie oft ein einzelner Ultraschallsensor 5 bis 10 innerhalb eines Messzyklus angesteuert werden soll. Diese Vorgehensweise wird nachfolgend Bezug nehmend auf drei verschiedene Beispiele näher erläutert:

In Fig. 1 befindet sich ein fahrzeugexternes Objekt 21 in der Umgebung 13, welches sich auf das Kraftfahrzeug 1 zu bewegt und sich außerdem im Umgebungsbereich vor dem Kraftfahrzeug 1 befindet, etwa in einem Winkel 10° von der Mittellängsachse 22 des Kraftfahrzeugs 1. Das Objekt 21 befindet sich dabei auf der linken Seite der Mittellängsachse 22 und bewegt sich in Richtung zum Kraftfahrzeug 1 gemäß der Pfeildarstellung 23. Das Objekt 21 wird nun in den Bildern der Kamera 4 detektiert und verfolgt. Die aktuelle Position des Objekts 21 relativ zum Kraftfahrzeug 1 bzw. der aktuelle Winkel bezüglich der Mittellängsachse 22 ist somit stets bekannt. Obwohl sich das Objekt 21 noch nicht im Erfassungsbereich 15 bis 20 eines der Ultraschallsensoren 5 bis 10 befindet, kann die Steuereinrichtung 12 schon jetzt mit der Festlegung der Anzahl der anzusteuernden Ultraschallsensoren 5 bis 10 und/oder der Reihenfolge und/oder der Häufigkeit beginnen. Die Steuereinrichtung 12 stellt fest, dass sich das Objekt 21 in Richtung zum Erfassungsbereich 17 des Ultraschallsensors 7 und somit in den Erfassungsbereich 17 hinein bewegt. Noch bevor das Objekt 21 den Erfassungsbereich 17 erreicht, wird das Ultraschallsystem 3 so betrieben, dass beispielsweise ausschließlich der Ultraschallsensor 7 zur Aussendung seines Ultraschalls angesteuert wird. Die aktuellen Messzyklen des Ultraschallsystems 3 beschränken sich also auf die Ansteuerung des Ultraschallsensors 7, sodass die Zeitdauer eines einzelnen Messzyklus beispielsweise nur 20 Millisekunden beträgt. Die übrigen Ultraschallsensoren 5, 6, 8, 9, 10 werden nicht angesteuert. Alternativ kann der Sensor 7 häufiger als die übrigen Sensoren angesteuert werden, während die übrigen Sensoren lediglich einmal pro Messzyklus angesteuert werden. Gelangt nun das Objekt 21 in den Erfassungsbereich 17, so kann dieses Objekt 21 besonders schnell mittels des Ultraschallsensors 7 detektiert und der Abstand entsprechend gemessen und angezeigt werden. Durch eine solche Ansteuerung verringert sich also die Reaktionszeit des Ultraschallsystems im Vergleich zu anderen Systemen deutlich.

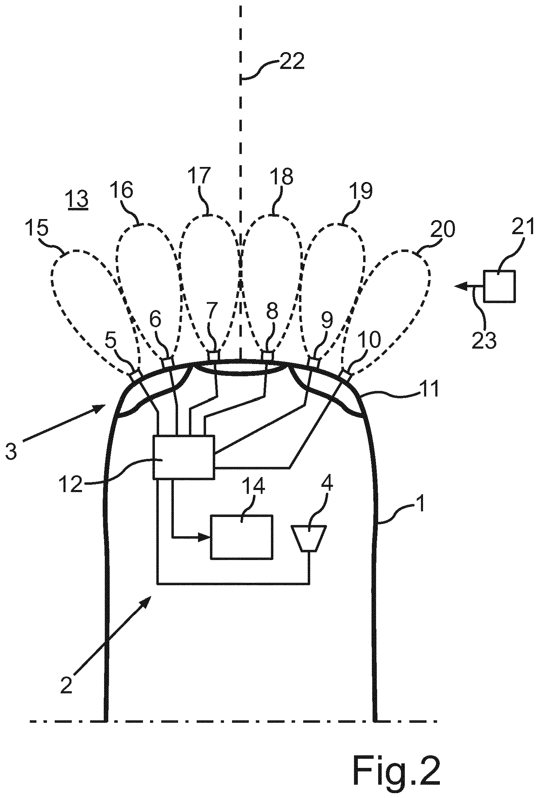

Ein weiteres Beispiel ist in Fig. 2 dargestellt. Hier befindet sich das Objekt 21 auf der rechten Seite neben dem Erfassungsbereich 20 des Ultraschallsensors 10 und bewegt sich in Richtung hin zum Erfassungsbereich 20 quer zu der Mittellängsachse 22, nämlich gemäß der Pfeildarstellung 23. Dies wird mittels der Kamera 4 erkannt, und die Steuereinrichtung 12 steuert das Ultraschallsystem 3 derart an, dass zunächst ausschließlich der Ultraschallsensor 10 zur Aussendung seines Ultraschallsignals angesteuert wird, während die anderen Ultraschallsensoren 5 bis 9 nicht angesteuert werden. Dies bedeutet, dass ein Messzyklus auf die Ansteuerung des Ultraschallsensors 10 beschränkt wird. Somit detektiert das Ultraschallsystem mittels des Ultraschallsensors 10 das Objekt 21 besonders schnell, weil für die Ansteuerung des Ultraschallsensors 10 nicht abgewartet werden muss, bis auch die anderen Ultraschallsensoren angesteuert werden.

Gelangt nun das Objekt 21 in den Erfassungsbereich 20, so wird der Abstand zum Objekt 21 sofort gemessen und angezeigt. Nachdem das Objekt 21 den Erfassungsbereich 20 erreicht hat, kann auch der benachbarte Ultraschallsensor 9 innerhalb der Messzyklen angesteuert werden, in dessen Erfassungsbereich 19 sich das Objekt 21 hinein bewegt. Mit anderen Worten wird der nächstliegende Ultraschallsensor 9 mit angesteuert, dessen Erfassungsbereich 19 dem Objekt 21 am nächsten liegt, in dessen Erfassungsbereich 19 sich das Objekt 21 jedoch noch nicht befindet. Liegt das Objekt 21 innerhalb des Erfassungsbereichs 20 des äußeren Ultraschallsensors 10, so werden innerhalb der Messzyklen ausschließlich die beiden Ultraschallsensoren 9, 10 angesteuert, und zwar einer nach dem anderen. Gelangt dann das Objekt 21 in den Erfassungsbereich 19, so kann zusätzlich noch der Ultraschallsensor 8 angesteuert werden, währen die Ansteuerung des äußersten Ultraschallsensors 10 gegebenenfalls unterbrochen werden kann. Es kann also vorgesehen sein, dass zu einem bestimmten Zeitpunkt maximal ausschließlich zwei Ultraschallsensoren innerhalb eines Messzyklus angesteuert werden. Optional können auch alle Ultraschallsensoren 5 bis 10 innerhalb der Messzyklen angesteuert werden, und in Abhängigkeit von der aktuellen Position des Objektes 21 kann die Häufigkeit der Ansteuerung der Ultraschallsensoren 5 bis 10 innerhalb eines Messzyklus festgelegt werden. Beispielsweise kann hier derjenige Ultraschallsensor 5 bis 10 zweimal oder dreimal oder sogar viermal innerhalb eines Messzyklus angesteuert werden, in dessen Erfassungsbereich sich das Objekt 21 befindet oder aber in dessen Erfassungsbereich sich das Objekt 21 hinein bewegt. Die übrigen Ultraschallsensoren 5 bis 10 können nur einmal innerhalb eines Messzyklus angesteuert werden.

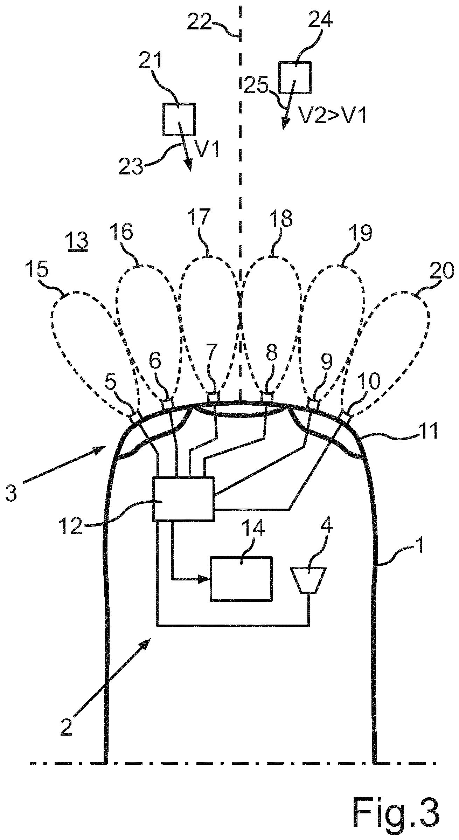

Ein weiteres Beispiel ist in Fig. 3 dargestellt. Hier befinden sich in der Umgebung 13 insgesamt zwei Objekte 21, 24, welche sich auf das Kraftfahrzeug 1 zu bewegen, und zwar mit unterschiedlichen Geschwindigkeiten. Während sich das erste Objekt 21 mit einer Geschwindigkeit v1 gemäß der Pfeildarstellung 23 bewegt, bewegt sich das zweite Objekt 24 mit einer größeren Geschwindigkeit v2 gemäß der Pfeildarstellung 25. Beide Objekte 21, 24 werden mittels der Kamera 4 verfolgt, sodass die Kamera 4 auch feststellt, dass sich das zweite Objekt 24 schneller in Richtung zum Erfassungsbereich 18 des Ultraschallsensors 8 bewegt. Die Kamera 4 stellt auch fest, dass sich das erste Objekt 21 mit der kleineren Geschwindigkeit v1 in Richtung auf den Erfassungsbereich 17 zu bewegt. All diese Informationen über die aktuelle Position und die Geschwindigkeit der Objekte 21, 24 werden an die Steuereinrichtung 12 übermittelt, welche nun das Ultraschallsystem 3 entsprechend ansteuert.

Beispielsweise werden nun ausschließlich die Ultraschallsensoren 7, 8 innerhalb der Messzyklen angesteuert, und zwar zunächst der Ultraschallsensor 8, in dessen Richtung sich das zweite Objekt 24 schneller bewegt. Bei diesem Beispiel werden die übrigen Ultraschallsensoren 5, 6, 9, 10 innerhalb der aktuellen Messzyklen nicht angesteuert.

Alternativ können auch alle Ultraschallsensoren 5 bis 10 angesteuert werden, und die Häufigkeit der Ansteuerung der Ultraschallsensoren 7, 8 innerhalb eines Messzyklus kann größer als die Häufigkeit der Ansteuerung der Ultraschallsensoren 5, 6, 9, 10 sein. Beispielsweise kann der Ultraschallsensor 8 dreimal währen eines einzelnen Messzyklus angesteuert werden, während der Ultraschallsensor 7 zweimal und die übrigen Ultraschallsensoren 5, 6, 9, 10 lediglich einmal angesteuert werden können. Somit wird einerseits erreicht, dass die beiden Objekte 21, 24 besonders schnell mittels des Ultraschallsystems 3 detektiert werden können; andererseits wird auch der gesamte Erfassungsbereich des Ultraschallsystems auf gegebenenfalls vorhandene Objekte überprüft, welche möglicherweise mit der Kamera 4 nicht erkannt worden sind. Insgesamt können also abhängig von der aktuellen Position des Objektes 21, 24 die Anzahl der innerhalb eines Messzyklus angesteuerten Sensoren 5 bis 10, wie auch die Reihenfolge der Ansteuerung sowie die Häufigkeit festgelegt werden, mit welche die einzelnen Sensoren 5 bis 10 innerhalb eines einzelnen Messzyklus angesteuert werden bzw. die Ultraschallsignale aussenden. Werden diese Parameter festgelegt, so können sie für eine Vielzahl von Messzyklen gelten, welche einer nach dem anderen wiederholt werden. Ändert sich die Position des Objektes derart, dass auch zumindest einer der genannten Parameter verändert wird, so erfolgt eine neue Festlegung zumindest dieses einen Parameters für die nachfolgenden Messzyklen. Diese werden dann ebenfalls periodisch wiederholt.

## Patentansprüche

1. Verfahren zum Betreiben eines Ultraschallsystems (3) mit einer Mehrzahl von an einem Kraftfahrzeug (1) verteilt angeordneten Ultraschallsensoren (5 bis 10), welche in Messzyklen zur Aussendung eines Ultraschallsignals angesteuert werden, wobei die Messzyklen wiederholt werden,
wobei
mittels einer von dem Ultraschallsystem (3) verschiedenen Erfassungseinrichtung (4) des Kraftfahrzeugs (1) ein Objekt (21, 24) in einer Umgebung (13) des Kraftfahrzeugs (1) detektiert und eine relative Position des Objekts (21, 24) relativ zum Kraftfahrzeug (1) bestimmt wird, und dass in Abhängigkeit von der aktuellen relativen Position die Anzahl der Ultraschallsensoren (5 bis 10) festgelegt wird, welche innerhalb eines Messzyklus angesteuert werden,
**dadurch gekennzeichnet, dass**
falls mittels der Erfassungseinrichtung (4) zumindest zwei Objekte (21, 24) in der Umgebung (13) detektiert werden, die jeweilige aktuelle Geschwindigkeit (v1, v2) der zumindest zwei Objekte (21, 24) mittels der Erfassungseinrichtung (4) bestimmt wird und die Ansteuerung der Ultraschallsensoren (5 bis 10) innerhalb des Messzyklus, insbesondere die Reihenfolge der Ansteuerung der Ultraschallsensoren (5 bis 10) innerhalb des Messzyklus und/oder die Häufigkeit der Ansteuerung zumindest eines der Ultraschallsensoren (5 bis 10) innerhalb des Messzyklus und/oder die Anzahl der anzusteuernden Ultraschallsensoren (5 bis 10) innerhalb des Messzyklus, in Abhängigkeit von den Geschwindigkeiten (v1, v2) der Objekte (21, 24) festgelegt wird.

2. Verfahren nach Anspruch 1,
**dadurch gekennzeichnet, dass**
in Abhängigkeit von der aktuellen relativen Position eine Reihenfolge der Ansteuerung der Ultraschallsensoren (5 bis 10) innerhalb des Messzyklus festgelegt wird.

3. Verfahren nach Anspruch 2,
**dadurch gekennzeichnet, dass**
innerhalb des Messzyklus derjenige Ultraschallsensor (5 bis 10) als erster Sensor angesteuert wird, in dessen Erfassungsbereich (15 bis 20) sich das Objekt (21, 24) befindet oder in dessen Erfassungsbereich (15 bis 20) sich das Objekt (21, 24) hineinbewegt.

4. Verfahren nach Anspruch 2 oder 3,
**dadurch gekennzeichnet, dass**
innerhalb des Messzyklus derjenige Ultraschallsensor (5 bis 10) als erster Sensor angesteuert wird, der einem Objekt (21, 24) am nächsten liegt.

5. Verfahren nach einem der vorhergehenden Ansprüche,
**dadurch gekennzeichnet, dass**
innerhalb des Messzyklus ausschließlich zumindest einer der folgenden
Ultraschallsensoren (5 bis 10) angesteuert wird:
- derjenige Ultraschallsensor (5 bis 10), in dessen Erfassungsbereich (15 bis 20) sich das Objekt (21, 24) befindet, und/oder
- derjenige Ultraschallsensor (5 bis 10), in dessen Erfassungsbereich (15 bis 20) sich das Objekt (21, 24) hineinbewegt.

6. Verfahren nach einem der vorhergehenden Ansprüche,
**dadurch gekennzeichnet, dass**
in Abhängigkeit von der aktuellen relativen Position eine Häufigkeit der Ansteuerung zumindest eines der Ultraschallsensoren (5 bis 10) innerhalb des Messzyklus festgelegt wird.

7. Verfahren nach einem der vorhergehenden Ansprüche,
**dadurch gekennzeichnet, dass**
mittels der Erfassungseinrichtung (4) die jeweils aktuelle Position des Objekts (21, 24) bezüglich des Kraftfahrzeugs (1) fortlaufend verfolgt wird, und dass die Reihenfolge der Ansteuerung der Ultraschallsensoren (5 bis 10) innerhalb eines Messzyklus und/oder die Häufigkeit der Ansteuerung zumindest eines der Ultraschallsensoren (5 bis 10) innerhalb des Messzyklus und/oder die Anzahl der anzusteuernden Ultraschallsensoren (5 bis 10) fortlaufend abhängig von der jeweils aktuellen Position eingestellt wird.

8. Verfahren nach einem der vorhergehenden Ansprüche,
**dadurch gekennzeichnet, dass**
die Erfassungseinrichtung (4) einen Erfassungsbereich (15 bis 20) aufweist, welcher in horizontaler Richtung breiter als ein Erfassungsbereich (15 bis 20) eines einzelnen Ultraschallsensors (5 bis 10) ist.

9. Verfahren nach einem der vorhergehenden Ansprüche,
**dadurch gekennzeichnet, dass**
als Erfassungseinrichtung (4) zumindest eine Kamera verwendet wird.

10. Verfahren nach einem der vorhergehenden Ansprüche,
**dadurch gekennzeichnet, dass**
als Erfassungseinrichtung (4) zumindest ein Radargerät verwendet wird.

11. Verfahren nach einem der vorhergehenden Ansprüche,
**dadurch gekennzeichnet, dass**
als Erfassungseinrichtung (4) zumindest ein optischer Abstandssensor, insbesondere ein Laser, verwendet wird.

12. Fahrerassistenzeinrichtung für ein Kraftfahrzeug (1), mit einem Ultraschallsystem (3), welches eine Mehrzahl von Ultraschallsensoren (5 bis 10) sowie eine Steuereinrichtung aufweist, welche dazu ausgelegt ist, die Ultraschallsensoren (5 bis 10) in Messzyklen zur Aussendung eines Ultraschallsignals anzusteuern und die Messzyklen zu wiederholen,
wobei
die Fahrerassistenzeinrichtung weiterhin eine von dem Ultraschallsystem (3) verschiedene Erfassungseinrichtung (4) aufweist, welche zum Detektieren eines Objekts (21, 24) in einer Umgebung (13) des Kraftfahrzeugs (1) und zur Bestimmung einer relativen Position des Objekts (21, 24) relativ zum Kraftfahrzeug (1) ausgebildet ist, und dass die Steuereinrichtung dazu ausgelegt ist, in Abhängigkeit von der aktuellen relativen Position die Anzahl der Ultraschallsensoren (5 bis 10) festzulegen, welche innerhalb eines Messzyklus angesteuert werden, **dadurch gekennzeichnet, dass**
falls mittels der Erfassungseinrichtung (4) zumindest zwei Objekte (21, 24) in der Umgebung (13) detektiert werden, die jeweilige aktuelle Geschwindigkeit (v1, v2) der zumindest zwei Objekte (21, 24) mittels der Erfassungseinrichtung (4) bestimmt wird und die Ansteuerung der Ultraschallsensoren (5 bis 10) innerhalb des Messzyklus, insbesondere die Reihenfolge der Ansteuerung der Ultraschallsensoren (5 bis 10) innerhalb des Messzyklus und/oder die Häufigkeit der Ansteuerung zumindest eines der Ultraschallsensoren (5 bis 10) innerhalb des Messzyklus und/oder die Anzahl der anzusteuernden Ultraschallsensoren (5 bis 10) innerhalb des Messzyklus, in Abhängigkeit von den Geschwindigkeiten (v1, v2) der Objekte (21, 24) festgelegt wird.

13. Kraftfahrzeug (1) mit einer Fahrerassistenzeinrichtung nach Anspruch 12.

## Claims

1. Method for operating an ultrasonic system (3) having a multiplicity of ultrasonic sensors (5 to 10) which are arranged distributed on a motor vehicle (1) and which are actuated in measuring cycles for the emission of an ultrasonic signal, wherein the measuring cycles are repeated,
wherein
an object (21, 24) in the surroundings (13) of the motor vehicle (1) is detected by means of a detection device (4), different from the ultrasonic system (3), of the motor vehicle (1), and a relative position of the object (21, 24) relative to the motor vehicle (1) is determined, and in that the number of ultrasonic sensors (5 to 10) which are actuated within one measuring cycle is defined as a function of the current relative position,
**characterized in that**
if at least two objects (21, 24) are detected in the surroundings (13) by means of the detection device (4), the respective current speed (v1, v2) of the at least two objects (21, 24) is determined by means of the detection device (4), and the actuation of the ultrasonic sensors (5 to 10) within the measuring cycle, in particular the sequence of the actuation of the ultrasonic sensors (5 to 10) within the measuring cycle and/or the frequency of the actuation of at least one of the ultrasonic sensors (5 to 10) within the measuring cycle and/or the number of ultrasonic sensors (5 to 10) to be actuated within the measuring cycle are/is defined as a function of the speeds (v1, v2) of the objects (21, 24).

2. Method according to Claim 1,
**characterized in that**
a sequence of the actuation of the ultrasonic sensors (5 to 10) within the measuring cycle is defined as a function of the current relative position.

3. Method according to Claim 2,
**characterized in that**
within the measuring cycle that ultrasonic sensor (5 to 10) in whose detection range (15 to 20) the object (21, 24) is located, or into whose detection range (15 to 20) the object (21, 24) is moving, is actuated as the first sensor.

4. Method according to Claim 2 or 3,
**characterized in that**
within the measuring cycle that ultrasonic sensor (5 to 10) which is closest to an object (21, 24) is actuated as the first sensor.

5. Method according to one of the preceding claims, **characterized in that**
within the measuring cycle only at least one of the following ultrasonic sensors (5 to 10) is actuated:
- that ultrasonic sensor (5 to 10) in whose detection range (15 to 20) the object (21, 24) is located, and/or
- that ultrasonic sensor (5 to 10) into whose detection range (15 to 20) the object (21, 24) is moving.

6. Method according to one of the preceding claims, **characterized in that**
a frequency of the actuation of at least one of the ultrasonic sensors (5 to 10) within the measuring cycle is defined as a function of the current relative position.

7. Method according to one of the preceding claims, **characterized in that**
by means of the detection device (4) the respective current position of the objects (21, 24) with respect to the motor vehicle (1) is continuously tracked, and **in that** the sequence of the actuation of the ultrasonic sensors (5 to 10) within a measuring cycle and/or the frequency of the actuation of at least one of the ultrasonic sensors (5 to 10) within the measuring cycle and/or the number of ultrasonic sensors (5 to 10) to be actuated are/is continuously set as a function of the respective current position.

8. Method according to one of the preceding claims, **characterized in that**
the detection device (4) has a detection range (15 to 20) which is wider in the horizontal direction than a detection range (15 to 20) of an individual ultrasonic sensor (5 to 10).

9. Method according to one of the preceding claims, **characterized in that**
at least one camera is used as the detection device (4).

10. Method according to one of the preceding claims, **characterized in that**
at least one radar device is used as the detection device (4).

11. Method according to one of the preceding claims, **characterized in that**
at least one optical distance sensor, in particular a laser, is used as the detection device (4).

12. Driver assistance device for a motor vehicle (1), having an ultrasonic system (3) which has a multiplicity of ultrasonic sensors (5 to 10) and a control device which is configured to actuate the ultrasonic sensors (5 to 10) in measuring cycles for the emission of an ultrasonic signal, and to repeat the measuring cycles,
wherein
the driver assistance device also has a detection device (4) which is different from the ultrasonic system (3) and is designed to detect an object (21, 24) in the surroundings (13) of the motor vehicle (1) and to determine a relative position of the object (21, 24) relative to the motor vehicle (1), and in that the control device is configured to define, as a function of the current relative position, the number of ultrasonic sensors (5 to 10) which are actuated within one measuring cycle,
**characterized in that**
if at least two objects (21, 24) are detected in the surroundings (13) by means of the detection device (4), the respective current speed (v1, v2) of the at least two objects (21, 24) is determined by means of the detection device (4), and the actuation of the ultrasonic sensors (5 to 10) within the measuring cycle, in particular the sequence of the actuation of the ultrasonic sensors (5 to 10) within the measuring cycle and/or the frequency of the actuation of at least one of the ultrasonic sensors (5 to 10) within the measuring cycle and/or the number of ultrasonic sensors (5 to 10) to be actuated within the measuring cycle are/is defined as a function of the speeds (v1, v2) of the objects (21, 24).

13. Motor vehicle (1) having a driver assistance device according to Claim 12.

## Revendications

1. Procédé de mise en fonctionnement d'un système à ultrasons (3) comprenant une pluralité de capteurs à ultrasons (5 à 10) répartis sur un véhicule automobile (1), qui sont attaqués au cours de cycles de mesure pour émettre un signal ultrasonore, les cycles de mesure étant répétés,
dans lequel un objet (21, 24) est détecté dans un environnement (13) du véhicule automobile (1) au moyen d'un dispositif de détection (4) du véhicule automobile (1) qui est différent du système à ultrasons (3), et une position relative de l'objet (21, 24) par rapport au véhicule automobile (1) est déterminée, et le nombre des capteurs à ultrasons (5 à 10) qui sont attaqués au cours d'un cycle de mesure est fixé en fonction de la position relative actuelle,
**caractérisé en ce que**, dans le cas où au moins deux objets (21, 24) sont détectés dans l'environnement (13) au moyen du dispositif de détection (4), la vitesse actuelle respective (v1, v2) des au moins deux objets (21, 24) est déterminée au moyen du dispositif de détection (4) et l'attaque des capteurs à ultrasons (5 à 10) au cours du cycle de mesure, en particulier la série des attaques des capteurs à ultrasons (5 à 10) au cours du cycle de mesure et/ou la fréquence de l'attaque d'au moins l'un des capteurs à ultrasons (5 à 10) au cours du cycle de mesure et/ou le nombre des capteurs à ultrasons (5 à 10) devant être attaqués au cours du cycle de mesure, est/sont fixé(s) en fonction des vitesses (v1, v2) des objets (21, 24).

2. Procédé selon la revendication 1,
**caractérisé en ce qu'**une série des attaques des capteurs à ultrasons (5 à 10) au cours du cycle de mesure est fixée en fonction de la position relative actuelle.

3. Procédé selon la revendication 2,
**caractérisé en ce que** le capteur à ultrasons (5 à 10) dans la zone de détection duquel (15, à 20) se trouve l'objet (21, 24) ou dans la zone de détection duquel (15 à 20) pénètre l'objet (21, 24) est attaqué au cours du cycle de mesure en tant que premier capteur.

4. Procédé selon la revendication 2 ou 3,
**caractérisé en ce que** le capteur à ultrasons (5 à 10) se trouvant le plus près d'un objet (21, 24) est attaqué en tant que premier capteur au cours du cycle de mesure.

5. Procédé selon l'une des revendications précédentes,
**caractérisé en ce qu'**au moins l'un des capteurs à ultrasons (5 à 10) suivants est attaqué de manière exclusive au cours du cycle de mesure :
- le capteur à ultrasons (5 à 10) dans la zone de détection duquel (15 à 20) se trouve l'objet (21, 24) et/ou
- le capteur à ultrasons (5 à 10) dans la zone de détection duquel (15 à 20) pénètre l'objet (21, 24).

6. Procédé selon l'une des revendications précédentes,
**caractérisé en ce qu'**une fréquence des attaques d'au moins l'un des capteurs à ultrasons (5 à 10) au cours du cycle de mesure est fixée en fonction de la position relative actuelle.

7. Procédé selon l'une des revendications précédentes,
**caractérisé en ce que** la position actuelle respective de l'objet (21, 24) par rapport au véhicule automobile (1) est poursuivie en continu au moyen du dispositif de détection (4), et **en ce que** la série des attaques des capteurs à ultrasons (5 à 10) au cours d'un cycle de mesure et/ou la fréquence des attaques d'au moins l'un des capteurs à ultrasons (5 à 10) au cours du cycle de mesure et/ou le nombre des capteurs à ultrasons (5 à 10) devant être attaqués est/sont réglé(s) en continu en fonction de la position actuelle respective.

8. Procédé selon l'une des revendications précédentes,
**caractérisé en ce que** le dispositif de détection (4) présente une zone de détection (15 à 20) qui est plus large dans la direction horizontale qu'une zone de détection (15 à 20) d'un capteur à ultrasons (5 à 10) individuel.

9. Procédé selon l'une des revendications précédentes,
**caractérisé en ce qu'**au moins une caméra est utilisée en tant que dispositif de détection (4).

10. Procédé selon l'une des revendications précédentes,
**caractérisé en ce qu'**au moins un appareil radar est utilisé en tant que dispositif de détection (4).

11. Procédé selon l'une des revendications précédentes,
**caractérisé en ce qu'**au moins un capteur de distance optique, en particulier un laser, est utilisé en tant que dispositif de détection (4).

12. Système d'aide à la conduite destiné à un véhicule automobile (1), comprenant un système à ultrasons (3) qui comporte une pluralité de capteurs à ultrasons (5 à 10) ainsi qu'un dispositif de commande qui est conçu pour attaquer les capteurs à ultrasons (5 à 10) au cours de cycles de mesure pour émettre un signal ultrasonore et pour répéter les cycles de mesure,
dans lequel le système d'aide à la conduite comporte en outre un dispositif de détection (4) différent du système à ultrasons (3), qui est conçu pour détecter un objet (21, 24) dans un environnement (13) du véhicule automobile (1) et pour déterminer une position relative de l'objet (21, 24) par rapport au véhicule automobile (1), et en ce que le dispositif de commande est conçu pour fixer le nombre des capteurs à ultrasons (5 à 10) devant être attaqués au cours d'un cycle de mesure en fonction de la position relative actuelle,
**caractérisé en ce que**, dans le cas où au moins deux objets (21, 24) sont détectés dans l'environnement (13) au moyen du dispositif de détection (4), la vitesse actuelle respective (v1, v2) des au moins deux objets (21, 24) est déterminée au moyen du dispositif de détection (4) et l'attaque des capteurs à ultrasons (5 à 10) au cours du cycle de mesure, en particulier la série des attaques des capteurs à ultrasons (5 à 10) au cours du cycle de mesure et/ou la fréquence de l'attaque d'au moins l'un des capteurs à ultrasons (5 à 10) au cours du cycle de mesure et/ou le nombre des capteurs à ultrasons (5 à 10) devant être attaqués au cours du cycle de mesure, est/sont fixé(s) en fonction des vitesses (v1, v2) des objets (21, 24).

13. Véhicule automobile (1) comportant un système d'aide à la conduite selon la revendication 12.
